# EUROPÄISCHE PATENTSCHRIFT

(11) **EP 2 257 351 B1**
(45) Veröffentlichungstag und Bekanntmachung des Hinweises auf die Patenterteilung: **17.12.2014**
(21) Anmeldenummer: 09715169.0
(22) Anmeldetag: 27.02.2009
(51) Int. Cl.: B01B 1/00, F01N 3/10, F01N 3/20

(54) **VERDAMPFUNGSEINHEIT ZUR ERZEUGUNG EINES MINDESTENS EINEN REDUKTIONSMITTELVORLÄUFER UND/ODER EIN REDUKTIONSMITTEL UMFASSENDEN GASES**
EVAPORATION UNIT FOR PRODUCING A GAS COMPRISING AT LEAST ONE REDUCTION AGENT PRECURSOR AND/OR A REDUCTION AGENT
UNITÉ D'ÉVAPORATION DESTINÉE À LA GÉNÉRATION D'UN GAZ CONTENANT AU MOINS UN PRÉCURSEUR D'AGENT DE RÉDUCTION ET/OU UN AGENT DE RÉDUCTION

(30) Priorität: 29.02.2008 DE 102008012087; 06.03.2008 DE 102008012972; 16.05.2008 DE 102008023938
(43) Veröffentlichungstag der Anmeldung: 08.12.2010
(73) Patentinhaber: Emitec Gesellschaft für Emissionstechnologie mbH, 53797 Lohmar (DE)
(72) Erfinder: BRÜCK, Rolf, 51429 Bergisch Gladbach (DE); HODGSON, Jan, 53840 Troisdorf (DE); SCHEPERS, Sven, 53844 Troisdorf (DE); VORSMANN, Christian, 51105 Köln (DE); BRUGGER, Marc, 53819 Neunkirchen (DE)
(74) Vertreter: Rössler, Matthias
(86) Internationale Anmeldenummer: PCT/EP2009/052362
(87) Internationale Veröffentlichungsnummer: WO 2009/106609

(56) Entgegenhaltungen:
- WO-A1-2008/138756
- WO-A1-2009/109423
- DE-A1-102006 023 146
- US-A1- 2003 188 855

## Beschreibung

Die vorliegende Erfindung betrifft eine Verdampfungseinheit zur Erzeugung eines Gasstroms, welcher einen Reduktionsmittel-Vorläufer, wie beispielsweise Harnstoff, und/oder ein Reduktionsmittel, wie beispielsweise Ammoniak, umfasst. Eine solche Verdampfungseinheit findet insbesondere Anwendung zur Bereitstellung gasförmigen Ammoniaks aus einem Ammoniak-Vorläufer, insbesondere in flüssiger und/oder fester Form. Die Erfindung findet insbesondere auch Anwendung im Rahmen der Abgasnachbehandlung bei Kraftfahrzeugen.

Insbesondere bei Diesel-Verbrennungskraftmaschinen hat es sich bewährt, dem von der Verbrennungskraftmaschine erzeugten Abgas Harnstoff in wässriger Lösung direkt oder nach einer Abgas-externen Hydrolyse Ammoniak zuzugeben. Hierbei kommt bei bekannten Verfahren ein Hydrolyse-Katalysator zum Einsatz, an dem aus dem Harnstoff Ammoniak gewonnen wird. Die wässrige Harnstofflösung wird stromaufwärts des Hydrolyse-Katalysators zugegeben, in den gasförmigen Zustand überführt und mit dem Hydrolyse-Katalysator in Kontakt gebracht. Der dabei generierte Ammoniak reagiert dann beispielsweise mit einem so genannten SCR-Katalysator weiter stromabwärts im Abgasstrom mit den dort enthaltenen Stickoxiden zu molekularem Stickstoff und Wasser.

Bei der Verdampfung der wässrigen Harnstofflösung ist die Temperaturführung besonders schwierig. Dies gilt insbesondere dann, wenn die benötigten Mengen der Harnstofflösung einerseits und die verfügbaren Temperaturen im Abgas andererseits beispielsweise während einer mobilen Anwendung stark variieren. Wird eine Verdampfung nicht vollständig erreicht, können sich Zwischenprodukte bilden, die gegebenenfalls zur Verstopfung der Verdampfungseinheit führen können. Derartige unerwünschte Nebenprodukte sind beispielsweise wasserunlösliches Biuret, das sich aus Isocyansäure und Harnstoff bildet, und Cyanursäure, welche das Trimerisierungsprodukt der Isocyansäure darstellt. Bei der Verdampfung eines Ammonik-Vorläufers, insbesondere einer flüssigen Harnstoff-Wasser-Lösung, wurde beobachtet, dass die Temperatureinbringung in die Flüssigkeit sehr schnell über einen kritischen Temperaturbereich hinweg erfolgen muss, um die Bildung der genannten unerwünschten, teilweise nur sehr schwer entfernbaren, Verbindungen zu vermeiden.

Es sind bereits Vorrichtungen zur Abgas-Externbehandlung einer Harnstoff-Wasser-Lösung beschrieben worden, allerdings konnten diese bislang, zumindest für den Einsatz im Automobilbereich, nicht überzeugen. Die bekannten Verdampfungsvorrichtungen können hier teilweise nicht für die gewünschte Vollständigkeit der Verdampfung über alle Betriebszustände und/oder Mengen des zu verdampfenden Ammoniak-Vorläufers garantieren. Dies trifft insbesondere dann zu, wenn eine hochdynamische Regelung der Verdampfungseinheit unter Berücksichtigung von Betriebszuständen einer mobilen Verbrennungskraftmaschine, wie beispielsweise bei einem Diesel-Motor, gegeben ist.

Aus DE 10 2006 023 147 A1 ist eine Verdampfungsvorrichtung zur Verdampfung einer Harnstoff-Wasser-Lösung bekannt, die außerhalb einer Abgasleitung einer Verbrennungskraftmaschine angeordnet ist. Es wird eine Vielzahl von Anordnungen von Heizvorrichtungen bezüglich einer Verdampfungskammer beschrieben. So kann bspw. die Heizvorrichtung um die Verdampfungskammer gewickelt sein oder aber die Verdampfungskammer kann um die Heizvorrichtung gewickelt sein, wobei verschiedene Wickelmuster vorgeschlagen werden. Durch die technische Lehre der DE 10 2006 023 147 A1 soll insbesondere eine Abkühlung eines in der Abgasleitung angeordneten Hydrolysekatalysatörs verhindert werden.

Hiervon ausgehend liegt der vorliegenden Erfindung die Aufgabe zugrunde, die mit Bezug auf den Stand der Technik auftretenden Probleme zumindest teilweise zu lösen. Insbesondere soll eine Verdampfungseinheit angegeben werden, die ein schnelles und vollständiges Verdampfen einer Harnstoff-Wasser-Lösung zur Erzeugung eines Ammoniak umfassenden Gasstroms in exakt vorgegebenen quantitativen Mengen hochdynamisch bereitstellt. Dabei soll die Verdampfungseinheit kompakt und einfach aufgebaut sein. Außerdem wird gewünscht, dass die Verdampfungseinheit kostengünstig herstellbar ist.

Diese Aufgaben werden gelöst mit einer Verdampfungseinheit gemäß den Merkmalen des Anspruchs 1. Vorteilhafte Ausgestaltungen der Verdampfungseinheit sind Gegenstand der abhängigen Ansprüche. Die in den abhängig formulierten Ansprüchen einzeln angegebenen Merkmale sind in beliebiger, technologisch sinnvoller, Weise miteinander kombinierbar und zeigen weitere Ausgestaltungen der Erfindung auf. Die Erfindung wird zudem durch die Beschreibung, insbesondere im Zusammenhang mit den Figuren, weiter charakterisiert und präzisiert.

Die erfindungsgemäße Verdampfungseinheit zum Verdampfen einer wässrigen Lösung umfassend mindestens einen Reduktionsmittel-Vorläufer umfasst wenigstens einen Verdampferhohlraum, welcher durch eine Wand aus einem Werkstoff umfassend Titan begrenzt ist und eine außerhalb des Verdampferhohlraums liegende Wärmevermittlungsschicht aus einem Werkstoff mit einer Wärmeleitfähigkeit von mindestens 100 W/mK (Watt pro Meter und Kelvin), die mit dem Verdampferhohlraum wärmeleitend verbunden ist. Erfindungsgemäß ist außerhalb der Wärmevermittlungsschicht eine Heizschicht ausgebildet, die stoffschlüssig mit der Wärmevermittlungsschicht verbunden ist.

Unter einem Reduktionsmittel-Vorläufer wird hier insbesondere Harnstoff verstanden, bevorzugt Harnstoff in wässriger Lösung. Diese wässrige Lösung kann weitere Inhaltsstoffe, insbesondere weitere Harnstoff-Vorläufer, wie beispielsweise Ammoniumformiat oder ähnliches enthalten. Die erfindungsgemäße Verdampfungseinheit ist insbesondere Teil eines Leitungsabschnitts eines in die Abgasleitung mündenden Zusatzsystems. Die Innenseite der Wand des Verdampferhohlraumes ist somit bevorzugt mit Titan-Werkstoff ausgekleidet bzw. der Verdampferhohlraum von dem Titan-Werkstoff umschlossen. Der Titan-Werkstoff kann dabei auch als Schicht bzw. (getrenntes) Material hin zum Verdampferhohlraum oder sogar im Inneren des Verdampferhohlraumes ausgebildet sein. Bevorzugt ist die innere Kontaktfläche des Verdampferhohlraumes zu mehr als 80% mit Titan(-legierungen) ausgeführt, insbesondere im Wesentlichen vollständig (>98%). Mit "Titan" sind hier insbesondere auch Oxide des Titans gemeint, die ggf. eine Oberschicht bilden.

Titan als Werkstoff des Verdampferhohlraums weist eine recht schlechte Wärmeleitfähigkeit auf. Um genügend Wärme in das zu verdampfende Fluid einbringen zu können, ist deshalb die Wärmevermittlungsschicht aus einem Werkstoff mit einer Wärmeleitfähigkeit von mindestens 100 W/mK, bevorzugt von mehr als 100 W/mK, insbesondere von mehr als 400 W/mK ausgebildet. Bevorzugt sind hierbei Wärmevermittlungsschichten aus Kupfer und/oder Aluminium. Die Wärmevermittlungsschicht kann insbesondere gut vergossen werden, so dass der Verdampferhohlraum im Inneren der Wärmevermittlungsschicht eingegossen ist. Unter einer wärmeleitenden Verbindung zwischen Wärmevermittlungsschicht und Verdampferhohlraum wird insbesondere verstanden, dass der Verdampferhohlraum in innigem Kontakt mit der Wärmevermittlungsschicht ist, so dass konduktive Wärmeleitung zwischen der Vermittlungsschicht und dem Verdampferhohlraum stattfinden kann. Durch die außerhalb der Wärmevermittlungsschicht ausgebildete Heizschicht erfolgt im Betrieb die Aufheizung der Wärmevermittlungsschicht. Durch die Wärmevermittlungsschicht wird gleichzeitig auch der Verdampferhohlraum und das im Inneren dieses Verdampferhohlraums vorliegende Fluid beheizt. Durch den Kontakt der Harnstoff-Wasser-Lösung mit der Wand des Verdampferhohlraums wird die Harnstoff-Wasser-Lösung erwärmt und verdampft. Der Dampf kann dann weiter erhitzt werden, wobei es bereits insbesondere aufgrund der Bildung von Titanoxiden auf der Oberfläche der Wand zu einer teilweisen Umsetzung des Harnstoffs zu Ammoniak kommt.

Gemäß einer vorteilhaften Ausgestaltung der erfindungsgemäßen Verdampfungseinheit weist die Wärmevermittlungsschicht mindestens eine außenseitig umlaufende Ausnehmung auf, in die mindestens ein Heizleiter eingelegt und mit der Wärmevermittlungsschicht verlötet ist.

Bevorzugt ist hierbei, dass die Wärmevermittlungsschicht außenseitig eine gewindeartige Ausnehmung aufweist, in die ein Heizleiter oder mehrere Heizleiter, um die Wärmevermittlungsschicht umlaufend auf die Wärmevermittlungsschicht aufgewickelt werden. So kann eine sehr gleichmäßige Beheizung der Wärmevermittlungsschicht erfolgen.

Bevorzugt ist hierbei eine Ausgestaltung, bei der mindestens zwei Verdampfungsabschnitte und entsprechend zwei Heizzonen in der Heizschicht ausgebildet sind. Dies bedeutet, dass die Heizschicht so ausgebildet ist, dass die Heizzonen getrennt voneinander betrieben werden können. So ist es insbesondere möglich, in einem ersten Teilbereich (erste Heizzone) die Heizschicht, und damit die Verdampfungseinheit, bei einer ersten Temperatur von beispielsweise 150 bis 180°C und in einem zweiten Teilbereich (zweite Heizzone) bei einer deutlich höheren Temperatur wie beispielsweise 350 bis 380°C zu betreiben. Diese Ausbildung in mehreren Teilbereichen (Heizzonen) kann beispielsweise dadurch erreicht werden, dass zwei Heizleiter in die Ausnehmung gewickelt werden, wobei ein erster Heizleiter die erste Heizzone und ein zweiter Heizleiter die zweite Heizzone bildet.

Gemäß einer weiteren vorteilhaften Ausgestaltung der erfindungsgemäßen Verdampfungseinheit umfasst die Heizschicht mindestens einen selbstregelnden Heizwiderstand. Unter einem selbstregelnden Heizwiderstand wird insbesondere ein PTC-Widerstand (PTC: positive temperature coefficient) verstanden. Hierunter wird ein positiver Temperatur-Koeffizient verstanden, der den Heizleiter selbstregelnd um eine Solltemperatur arbeiten lässt. Solche selbstregelnden Heizwiderstände werden beispielsweise aus Keramik-Materialien, wie beispielsweise Bariumtitanat-Keramiken und/oder dotierten Polymeren, aufgebaut. Solche selbstregelnden Heizwiderstände erlauben eine einfache Ansteuerung der erfindungsgemäßen Verdampfungseinheit, weil dadurch die Regelung auf einfache Art und Weise durch den Heizwiderstand selbst erfolgt.

Gemäß einer weiteren vorteilhaften Ausgestaltung der erfindungsgemäßen Verdampfungseinheit weist die Heizschicht eine innere und eine äußere Kontaktschicht auf, zwischen der der selbstregelnde Heizwiderstand ausgebildet ist.

Über die innere und äußere Kontaktschicht kann der selbstregelnde Heizwiderstand auf einfache Art und Weise elektrisch kontaktiert und betrieben werden. Durch eine vollflächige Verbindung zwischen den Kontaktschichten und dem selbstregelnden Widerstand können geringe elektrische Widerstände in den Kontaktschichten erreicht werden, so dass diese nicht selbst aufgrund der Ohmschen Wärme signifikant erhöhte Temperaturen aufweisen. Bevorzugt liegt die innere Kontaktschicht zwischen dem selbstregelnden Heizwiderstand und der Wärmevermittlungsschicht, während die äußere Kontaktschicht auf der entgegengesetzten Seite des selbstregelnden Heizwiderstands ausgebildet ist.

Gemäß einer weiteren vorteilhaften Ausgestaltung der erfindungsgemäßen Verdampfungseinheit ist die Wärmevermittlungsschicht aus einem Werkstoff umfassend mindestens eines der folgenden Materialien aufgebaut:
a) Kupfer;
b) Aluminium.

Kupfer und/oder Aluminium haben sich als vorteilhaft erwiesen. Zum einen weisen sie genügend hohe Wärmeleitfähigkeiten von über 200 W/mK im Falle von Aluminium und von über 400 W/mK im Falle von Kupfer auf. Weiterhin können diese Materialien und ihre Legierungen auf einfache Art und Weise mit dem Verdampfungshohlraum aus Titan vergossen werden. Weiterhin erlauben diese Werkstoffe eine Bearbeitbarkeit ihrer Außenfläche, die eine beliebige Formgebung der Wärmevermittlungsschicht im außenseitigen Bereich, beispielsweise durch Einbringen von Ausnehmungen oder Ähnlichem, ermöglicht.

Zudem können Heizleiter auf einfache Art und Weise mit Kupfer und/oder Aluminium oder deren Legierungen verlötet werden, insbesondere hartverlötet ("brazed") oder weichverlötet ("soldered"). Dies sind die stoffschlüssigen Verbindungsverfahren zwischen Heizschicht und Wärmevermittlungsschicht, die grundsätzlich im Rahmen dieser Erfindung in vorteilhafter Weise eingesetzt werden können, um die Heizschicht mit der Wärmevermittlungsschicht zu verbinden.

Gemäß einer weiteren vorteilhaften Ausgestaltung der erfindungsgemäßen Verdampfungseinheit umfasst der Verdampferhohlraum einen Kanal.

Hierbei wird die wässrige Lösung (Reduktionsmittel-Vorläufer) in ein eingangsseitiges Ende des Kanals gefördert, wo diese durch den Kontakt mit den beheizten Wänden des Kanals verdampft. Die verdampfte wässrige Lösung durchströmt den Kanal zu einem endseitigen Abschnitt, an dem der Dampf den Verdampferhohlraum verlässt. Durch die Ausgestaltung der Wände des Verdampferhohlraums aus Titan bilden sich auf diesen Titanoxide, die eine Hydrolyse des Reduktionsmittel-Vorläufers zu Reduktionsmittel und insbesondere des Harnstoffs zu Ammoniak katalysieren. So kommt es bereits während des Durchquerens des Verdampfers zu einer zumindest teilweisen Hydrolyse des Reduktionsmittel-Vorläufers zu Reduktionsmittel. Der Dampf, welcher den Verdampfungshohlraum verlässt, enthält in vorteilhafter Weise also Reduktionsmittel und insbesondere Ammoniak. Der Kanal kann gewunden und insbesondere mäanderförmig, d.h. insbesondere mit mindestens zwei Richtungsänderungen, ausgebildet sein. Weiterhin kann ein gerader Kanal ausgebildet sein. Zusätzlich können Strukturen ausgebildet sein, die in den Kanal hinein ragen. So wird in vorteilhafter Weise vermieden, dass Tropfen der wässrigen Lösung ohne zu verdampfen durch den Verdampfer durchtreten. Im Falle eines Kanals ist insbesondere die Wärmevermittlungsschicht und/oder die Heizschicht konzentrisch oder koaxial zum Kanal ausgebildet.

Gemäß einer weiteren vorteilhaften Ausgestaltung der erfindungsgemäßen Verdampfungseinhcit weist der Verdampferhohlraum eine Eingangsöffnung für die Zufuhr einer wässrigen Lösung auf, die gegenüber eines Teils der Wand des Verdampferhohlraums ausgebildet ist.

Das bedeutet, dass im Betrieb durch die Eingangsöffnung eintretende wässrige Lösung auf die gegenüberliegende beheizte Wand des Verdampferhohlraums auftrifft. Hierdurch kommt es zu einer Verdampfung der wässrigen Lösung. Die Eingangsöffnung kann zusätzlich eine Tropfenzugabe aufweisen, die geeignet ist, wässrige Lösungen zumindest teilweise in Tropfenform auf einen Teil der Wand des Verdampferhohlraums aufzugeben.

Diese Tropfenzugabe kann insbesondere eine Düse umfassen, die die wässrige Lösung einsprüht. Alternativ oder zusätzlich kann hier auch eine Kapillare ausgebildet sein, bei der durch Ablösen vom Kapillarrand Tropfen in den Verdampferhohlraum eintropfen.

Besonders bevorzugt umfasst die Tropfenzugabe eine Düse und insbesondere eine Zerstäuberdüse mittels der die wässrige Lösung in Tropfenform in den Verdampferhohlraum eingetragen wird. Hierdurch wird eine gute Verteilung der wässrigen Lösung auf verschiedene Bereiche der Wand bzw. des Innenraumes des Verdampferhohlraums erreicht, so dass es nicht zu einer übermäßigen lokalen Abkühlung von Teilbereichen des Verdampferhohlraums kommt.

Gemäß einer weiteren vorteilhaften Ausgestaltung ist die Tropfenzugabe geeignet, mindestens einen Tropfenstrahl auf einen Teil der Wand des Verdampferhohlraums aufzugeben.

Ein Tropfenstrahl besteht zumindest teilweise aus Tropfen der wässrigen Lösung, die bevorzugt verschiedene Volumina aufweisen können. Durch eine solche Tropfenzugabe ist eine gute Verteilung der wässrigen Lösung auf der Wand bzw. in dem Innenraum des Verdampferhohlraums möglich.

Gemäß einer weiteren vorteilhaften Ausgestaltung der erfindungsgemäßen Verdampfungseinheit ist der Verdampferhohlraum zumindest in Teilbereichen, zulaufend ausgebildet. Dies bedeutet, dass sich ein freier Radius im Inneren des Verdampferhohlraums in zumindest eine Richtung verkleinert bzw. verjüngt. Bevorzugt ist hierbei eine trichterförmige oder kegelförmige Ausgestaltung des Verdampferhohlraums, zumindest in mindestens einem Teilbereich. Auch eine kegelstumpfförmige Ausgestaltung ist möglich und erfindungsgemäß.

Die zulaufende Ausbildung des Verdampferhohlraums zumindest in Teilbereichen, erhöht im Betrieb die Kontaktmöglichkeit der in den Verdampferhohlraum eingebrachten Tropfen. Der zulaufende Teilbereich wirkt als eine Art Tropfenfänger, der dafür sorgt, dass die entsprechenden Tropfen der wässrigen Lösung sicher mit der Wand in Kontakt kommen.

Gemäß einer vorteilhaften Weiterbildung der Verdampfungseinheit ist die Oberflächenbeschaffenheit der Wand des Verdampferhohlraums hinsichtlich zumindest eines Elementes der Gruppe Rauhigkeit, Strukturierung, Beschichtung verschieden ausgeführt. Insbesondere ist die Wand in den Bereichen, die von einem Tropfenstrahl oder einem Sprühkegel der wässrigen Lösung beaufschlagt werden, mit einer anderen Rauhigkeit, Strukturierung und/oder Beschichtung versehen als die anderen Bereiche des Verdampferhohlraums.

Gemäß einer weiteren vorteilhaften Ausgestaltung der Verdampfungseinheit ist der Verdampferhohlraum zumindest in Teilbereichen mit einem Gewebe oder Gewirr gefüllt, wobei das Gewebe oder Gewirr zumindest teilweise aus einem die Hydrolyse der wässrigen Lösung forderndem Werkstoff besteht, insbesondere aus einem Werkstoff, der Titan umfasst. Das Gewebe oder Gewirr ist insbesondere mit der Wand des Verdampferhohlraums wärmeleitend verbunden. Das Gewebe oder Gewirr besteht dabei insbesondere aus zumindest einem Draht, bevorzugt aus einer Vielzahl von Drähten. Der Draht/die Drähte weisen insbesondere stoffschlüssige Verbindungen mit sich selbst/miteinander auf, so dass durch die Verbindungen eine gleichmäßige Wärmeverteilung innerhalb des Gewirrs oder Gewebes erreicht wird. Das Gewebe oder Gewirr weist insbesondere eine Packungsdichte von 2 bis 25 % auf.

Durch das Gewebe oder Gewirr wird eine sehr große Verdampferoberfläche bereitgestellt. Insbesondere durch die Anordnung des Gewebes oder Gewirrs im Sprühkegel der in den Verdampfungshohlraum eingebrachten wässrigen Lösung wird somit eine weitere Verkleinerung der Tropfen der wässrigen Lösung erreicht, und dadurch die Verdampfung verbessert.

Vorteilhafterweise bildet das Gewebe oder Gewirr die Wand des Verdampferhohlraums und ist wärmeleitend mit der Wärmevermittlungsschicht der Verdampfungseinheit verbunden.

Eine wärmeleitende Verbindung umfasst hier insbesondere eine Kontaktierung der Oberflächen des Gewebes oder Gewirrs mit der Wand bzw. der Wärmevermittlungsschicht. Die Kontaktierung kann ebenfalls durch eine zumindest teilweise formschlüssige Verbindung des Gewebes oder Gewirrs mit der Wand bzw. der Wärmevermittlungsschicht sichergestellt sein.

Gemäß einer besonders vorteilhaften Ausgestaltung der Verdampfungseinheit ist das Gewebe oder Gewirr nur entlang der Innenwandung des Verdampferhohlraums angeordnet, insbesondere so, dass der Verdampferhohlraum zwischen 10 % und 40 % durch das Gewebe oder Gewirr ausgefüllt ist. Da das Gewebe oder Gewirr selber eine geringe Packungsdichte aufweist, ist der Verdampferhohlraum nur zu höchstens 10 % durch das Gewebe- oder Gewirr (also nur durch das Material, ohne Poren) beaufschlagt.

Bevorzugt ist der Bereich des Verdampferhohlraums, der von dem Sprühkegel der aus einer Düse in den Verdampferhohlraum austretenden wässrigen Lösung beaufschlagt wird, zumindest zum größten Teil nicht durch das Gewebe oder Gewirr ausgefüllt (freier Sprühkegel). Insbesondere ist auch der Bereich der Innenwand des Verdampferhohlraums, der durch den Sprühkegel beaufschlagt wird, nicht durch das Gewebe oder Gewirr bedeckt. Dies kann insbesondere bei der Einbringung von größeren Tropfen der wässrigen Lösung von Vorteil sein, die dann durch den Aufprall auf der Innenwand des Verdampfungshohlraums fein zerstäubt werden und erst dann von der durch das Gewebe oder Gewirr bereitgestellten Verdampferoberfläche verdampfen.

Gemäß einer weiteren vorteilhaften Ausgestaltung der Verdampfungseinheit ist das Gewebe oder Gewirr selbst als geregelte oder selbstregelnde Widerstandsheizung ausgeführt, insbesondere als titanbeschichteter Heizleiter.

Gemäß einer weiteren vorteilhaften Ausgestaltung der erfindungsgemäßen Verdampfungseinheit ist ein Hydrolysekatalysatorkörper stromabwärts des Verdampferhohlraums ausgebildet.

Der Hydrolysekatalysatorkörper weist eine Hydrolysekatalysatorbeschichtung auf, die die Hydrolyse von Harnstoff zu Ammoniak katalysiert Dies erhöht den Anteil von Ammoniak deutlich, insbesondere kann so ein Gasstrom erzeugt werden, im dem 90% und mehr des eingesetzten Harnstoffs zu Ammoniak umgesetzt wurden, insbesondere sogar von mehr als 95%, besonders bevorzugt mehr als 98%.

Weiterhin wird eine Vorrichtung vorgeschlagen, die neben einer erfindungsgemäßen Verdampfungseinheit ein Reservoir und eine Pumpe umfasst, die zumindest teilweise durch einen verbindenden Leitungsabschnitt verbunden sind.

Durch eine solche Vorrichtung ist es möglich, eine kompakte Vorrichtung zur Bereitstellung von Ammoniak darzustellen.

Weiterhin wird ein Kraftfahrzeug mit einer Verbrennungskraftmaschine und einer Abgasanlage vorgeschlagen, bei dem die Abgasanlage zumindest einen SCR-Katalysatorkörper aufweist und zwischen der Verbrennungskraftmaschine und dem zumindestens einen SCR-Katalysatorkörper wenigstens ein Anschluss mit einer erfindungsgemäßen Verdampfungseinheit oder einer erfindungsgemäßen Vorrichtung vorgesehen ist, so dass gasförmiges Reduktionsmittel und/oder ein gasförmiger Reduktionsmittel-Vorläufer so in die Abgasanlage einleitbar sind, dass dieses bzw. dieser zu dem mindestens einen SCR-Katalysator strömt.

Die für die Verdampfungseinheit offenbarten Details und Vorteile sind auf die entsprechende Vorrichtung und das Kraftfahrzeug übertrag- und anwendbar und umgekehrt.

Ganz besonders bevorzugt ist die Ausgestaltung einer Verdampfungseinheit mit zumindest einer Mehrzahl der folgenden Eigenschaften:
- Die Wand der Verdampfungseinheit (zumindest der zu benetzenden Flächen) umfasst einen Titan-Werkstoff.
- Die Wand ist von mindestens einem Heizleiter umwickelt und ggf. mit eingegossen (z.B. nach Art eines Mehrschichtaufbaus).
- Die Wand bzw. der mindestens eine Heizleiter kann (ganz oder teilweise) umgeben sein von einem Werkstoff zur Wärmevergleichmäßigung (wie z.B. einem Kupfer- oder Aluminium-Werkstoff).
- Wenigstens einer der Heizleiter umfasst ein PTC-Element.
- Die Form der Verdampfungseinheit bzw. die Lage der mindestens einen Tropfenabgabe ist so gewählt, dass der Einspritzstrahl möglichst die gesamte Fläche der bereitgestellten Wand benetzt.
- Die Zugabe des Reduktionsmittels/Reduktionsmittelvorläufers erfolgt mittels einer (ggf. mehrerer) Einspritzdüse und/oder Dosierkanal.
- Der Auslauf aus dem Verdampferholraum ist versetzt zur Tropfenabgabe (nicht gegenüberliegend bzw. nicht im direkten Strahlbereich).
- Die Öffnung der Einspritzdüse und/oder des Dosierkanals hin zum Verdampferholraum ist unbeheizt und hat bevorzugt einen Durchmesser kleiner als 10 mm, insbesondere kleiner als 5 mm.
- Der Verdampferholraum ist (im Querschnitt) nach Art eines Doppelkegels aufgebaut.
- Nachfolgend des Verdampferholraumes ist ein beheizbarer Tropfenabscheider vorgesehen, ggf. gefolgt von einem Hydrolyse-Katalysator.
- Ein Hydrolyse-Katalysator ist konzentrisch zum Verdampferholraum bzw. zur Verdampfungseinheit ausgebildet.

Im Folgenden wird die Erfindung anhand der beigefügten Figuren näher erläutert, ohne dass sie auf die dort gezeigten Details und Ausführungsbeispiele beschränkt wäre. Es zeigen schematisch:
- Figur 1: eine erste Ausführungsform einer erfindungsgemäßen Verdampfungseinheit;
- Figur 2: ein Detail einer zweiten Ausführungsform einer Verdampfungseinheit;
- Figur 3: den Aufbau eines SCR-Systems bei einem Kraftfahrzeug;
- Figur 4: eine dritte Ausführungsform einer Verdampfungseinheit;
- Figur 5: eine vierte Ausführungsform einer Verdampfungseinheit;
- Figur 6: eine fünfte Ausführungsform einer Verdampfungseinheit;
- Figur 7: eine sechste Ausführungsform einer Verdampfungseinheit;
- Figur 8: ein Detail einer siebten Ausführungsform einer Verdampfungscinhcit; und
- Figur 9: ein weiteres Detail einer achten Ausführungsform einer Verdampfungseinheit.

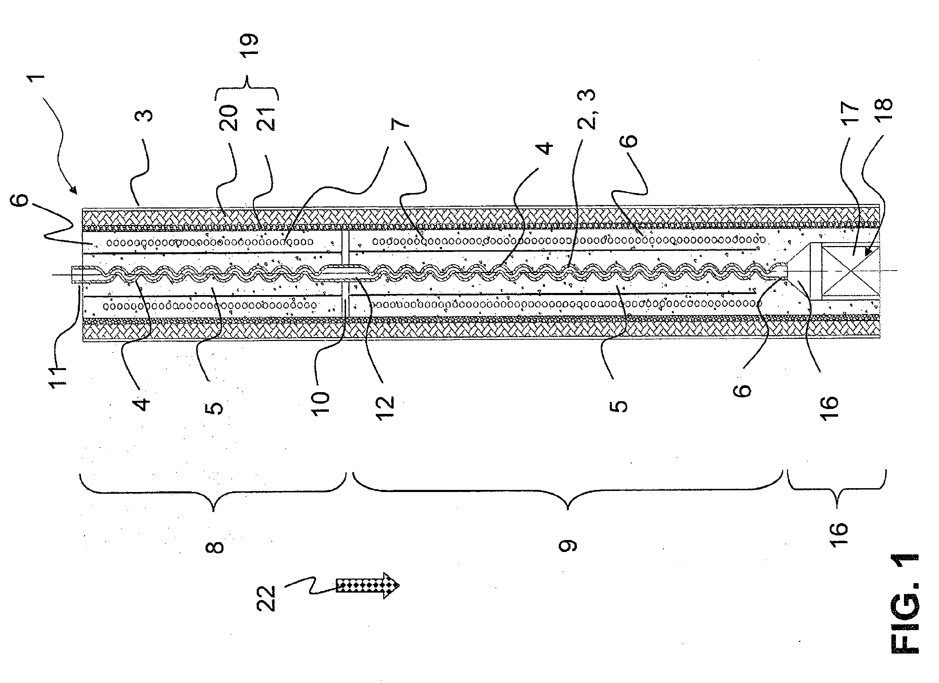

Figur 1 zeigt schematisch eine Ausführungsvariante einer erfindungsgemäßen Verdampfungseinheit 1. Diese dient zum Verdampfen einer wässrigen Lösung, umfassend mindestens einen Reduktionsmittel-Vorläufer, insbesondere Harnstoff-Wasser-Lösung. Die Verdampfungseinheit 1 umfasst einen Verdampferhohlraum 2, der im vorliegenden Ausführungsbeispiel als Kanal 3 ausgebildet ist. Der Verdampferhohlraum 2 ist durch eine Wand 4 aus Titan begrenzt. Der Kanal 3 ist mäanderformig gewunden, dass heißt mit mindestens zwei Umlenkungen ausgebildet, die dafür sorgen, dass keine unverdampfte Harnstoff-Wasser-Lösung den Kanal 3 durchtritt, ohne mit der Wand 4 in Kontakt zu kommen.

Durch Oxidation mit Luftsaucrstoff bildet sich auf der inneren Oberfläche der Wand 4 Titanoxid, welches die Hydrolyse von Harnstoff zu Ammoniak katalysiert. Rings um den Verdampferhohlraum 2 ist eine Wärmevermittlungsschicht 5 ausgebildet. Insofern ist der Kanal 3 in einen entsprechenden Körper, gebildet aus der Wärmevermittlungsschicht 5, eingebettet. Diese kann insbesondere durch Vergießen des Verdampferhohlraums 2 mit einem Material umfassend Kupfer und/oder Aluminium erhalten werden. Um die Wärmevermittlungsschicht 5 herum ist eine Heizschicht 6 ausgebildet. Diese besteht im vorliegenden Beispiel aus einer Schicht Aluminium, in die ein Heizleiter 7 eingearbeitet ist. Dieser ist mit entsprechenden Stromquellen (nicht gezeigt) verbindbar, so dass die Heizschicht 6 durch Ohmsche Wärme heizbar ist. Im vorliegenden Ausführungsbeispiel weist die Verdampfungseinheit 1 einen ersten Verdampfungsabschnitt 8 und einen zweiten Verdampfungsabschnitt 9 (unabhängige Heizzonen) auf. Diese sind durch einen Spalt 10 in Wärmevermittlungsschicht 5 und Heizschicht 6 getrennt.

Im Betrieb der Verdampfungseinheit 1 wird der Kanal 3 durch einen Einlauf 11 mit flüssiger Harnstoff-Wasser-Lösung beschickt. Der Kanal 3 wird in Strömungsrichtung 22 durchströmt. Die flüssige Harnstoff-Wasser-Lösung wird im ersten Verdampfungsabschnitt 8 im Kanal verdampft. Die dann zumindest teilweise dampfförmige Harnstoff-Wasser-Lösung verlässt den ersten Verdampfungsabschnitt 8 durch ein gerades Zwischenstück 12 des Kanals 3 und strömt dann durch den Kanal im zweiten Verdampfungsabschnitt 9. Dort wird durch die Heizschicht 6 Wärme eingebracht, mit der der Dampf der Harnstoff-Wasser-Lösung in diesem zweiten Verdampfungsabschnitt 9 des Kanals 3 weiter erhitzt und die bestehenden flüssigen Anteile der Harnstoff-Wasser-Lösung verdampft werden. Durch die Titanoxid-Bereiche im Inneren des Kanals 3 wird die Hydrolyse von Harnstoff zu Ammoniak katalysiert und verbessert.

Die verdampfte Harnstoff-Wasser-Lösung mit Anteilen von Ammoniak verlässt den Kanal durch den Auslauf 13 und tritt in die Reaktionszone 14 ein. Diese Reaktionszone 14 umfasst einen Hydrolysekatalysatorkörper 15, der über einen Einlaufkonus 16 mit dem Auslauf 13 des Kanals 3 verbunden ist. Der Hydrolysekatalysatorkörper 15 umfasst einen Wabenkörper 17 als Katalysator-Trägerkörper, der mit einer die Hydrolyse von Harnstoff zu Ammoniak katalysierenden Beschichtung 18 versehen ist.

Außerhalb der Heizschicht 6 ist in diesem Ausführungsbeispiel eine thermische Isolierung 19 vorgesehen, die eine Keramikschicht 20 und ein Keramikrohr 21 umfasst.

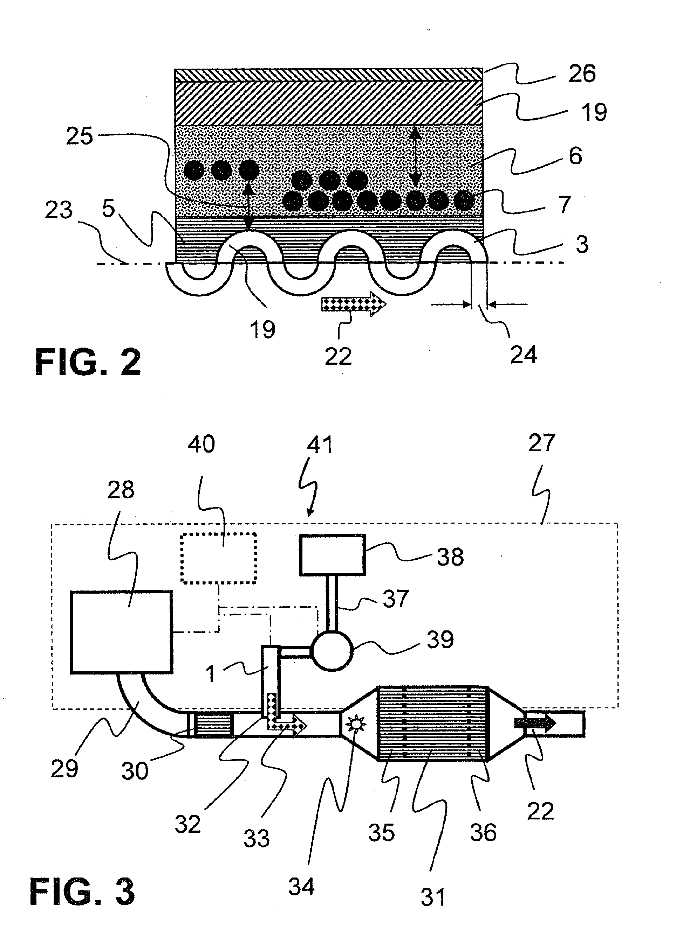

Die Fig. 2 zeigt ein Detail einer weiteren Ausführungsform der Verdampfungseinheit 1 im Teilquerschnitt. Unten in Fig. 2 ist dargestellt, wie der Strömungskanal 4 um eine zentrale Achse 23 regelmäßig pendelt. Der Kanal 3 hat dabei einen Durchmesser 24 von beispielsweise 4 mm. Im Inneren des Kanals 3 bzw. an dessen Wand 4 ist zudem eine Hydrolyse-Beschichtung 18 vorgesehen. Der Kanals 3 ist jedoch in einer Wärmevermittlungsschicht 5 eingegossen, die stoffschlüssig mit einer Heizschicht 6 verbunden ist, in der auch die Heizleiter 7 nach Art einer wendelförmigen Windung bereitgestellt sind. Im linken Bereich ist dabei ein Heizleiter 7 angedeutet, der mit einem bestimmten Abstand 25 zum Kanal 3 positioniert ist. Weiter rechts sind mehrere, sich teilweise überlagernde, Heizleiter 7, insbesondere in einer engeren Anordnung zueinander vorgesehen, wobei hier nun der Abstand 25 hin zu einem die Verdampfungseinheit 1 umgebenden Gehäuse 26 bzw. der thermischen Isolierung 19 vergrößert wurde, so dass diese Heizleiter 7 näher am Kanal 3 vorgesehen sind. Durch die Variation des Abstandes 25 zwischen Heizleiter 7 und Kanal 3 kann das Temperaturprofil im Kanal variiert werden (unterschiedliche Heizzonen).

Fig. 3 zeigt nunmehr schematisch ein Kraftfahrzeug 27, insbesondere einen Personenkraftwagen oder einen Lastkraftwagen. Das in der Verbrennungskraftmaschine 28 generierte Abgas wird nun über eine entsprechende Abgasanlage 29 gereinigt und an die Umgebung abgegeben. Dabei durchströmt das Abgas in Strömungsrichtung 22 zunächst einen katalytischen Konverter 30 (z.B. einen Oxidationskatalysator), um weiter stromabwärts schließlich auf einen SCR-Katalysatorkörper 31 zu treffen. Zwischen dem katalytischen Konverter 30 und dem SCR-Katalysatorkörper 31 ist der Anschluss 32 für die erfindungsgemäße Verdampfungseinheit 1 vorgesehen, so dass dort der Ammoniak umfassende Gasstrom 32 eingeleitet wird. Der mit Ammoniak beströmte Abgasstrom erreicht dann gegebenenfalls einen Strömungsbeeinflusser 34 (z.B. einen statischen Mischer), bevor dieses Gemisch den SCR-Katalysatorkörper 31 erreicht. Der Vollständigkeit halber sei darauf hingewiesen, dass der SCR-Katalysator im Eintrittsbereich 35 und/oder im Austrittsbereich 36 mit weiteren Abgasbehandlungskomponenten versehen sein kann, wie beispielsweise einem Partikelabscheider im Eintrittsbereich 35 und/oder einem Oxidationskatalysator im Austrittsbereich 36. Gleichfalls sei darauf hingewiesen, dass auch andere Abgasbehandlungseinrichtungen in der Abgasanlage 29 vorgesehen sein können.

Die erfindungsgemäße Verdampfungseinheit 1 ist nun über mehrere Leitungsabschnitte 37 mit einem Reservoir 38 verbunden. In dem Reservoir 38 ist beispielsweise flüssige Harnstoff-Wasser-Lösung vorgesehen, die dann mittels einer Dosierpumpe 39 zeit- und/oder volumengerecht der Verdampfungseinheit 1 zugeführt wird. Alternativ kann statt einer Dosierpumpe 39 eine Pumpe ausgebildet sein, die einen Druck vorhält, wobei die Dosierung in die Verdampfungseinheit 1 über ein nicht gezeigtes Ventil erfolgt.

Die Dosierpumpe 39, die Verdampfungseinheit 1 und/oder die Verbrennungskraftmaschine 28 können mit einer Steuerung 40 (datentechnisch und/oder wirktechnisch) verbunden sein, um hier eine geregelte Beimengung von HarnstoffWasser-Lösung zur Verdampfungseinheit 1 bzw. Ammoniakgas zum Abgas zu gewährleisten.

Nur der Vollständigkeit halber sei auch darauf hingewiesen, dass eine Vorrichtung 41 umfassend wenigstens ein Reservoir 38, ein Leitungsabschnitt 37, eine Dosierpumpe 39 und eine Verdampfungseinheit 1 in beliebigen Stückzahlen auch separat als Komponentensatz mit/oder ohne Steuerung 40 angeboten werden kann. Alternativ kann die Vorrichtung 41 statt einer Dosierpumpe 39 eine Pumpe und ein Dosierventil umfassen.

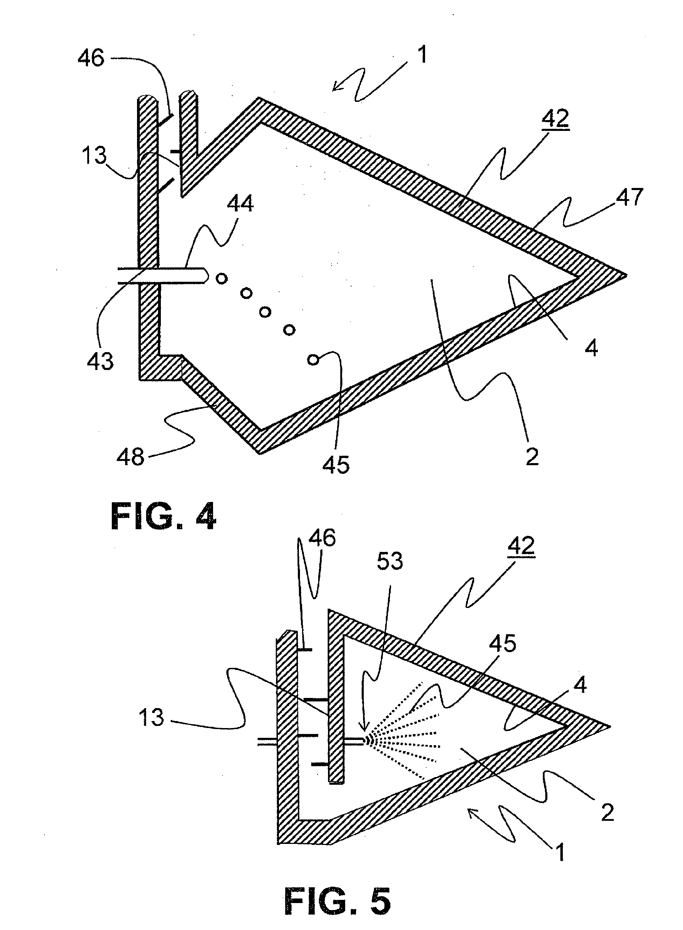

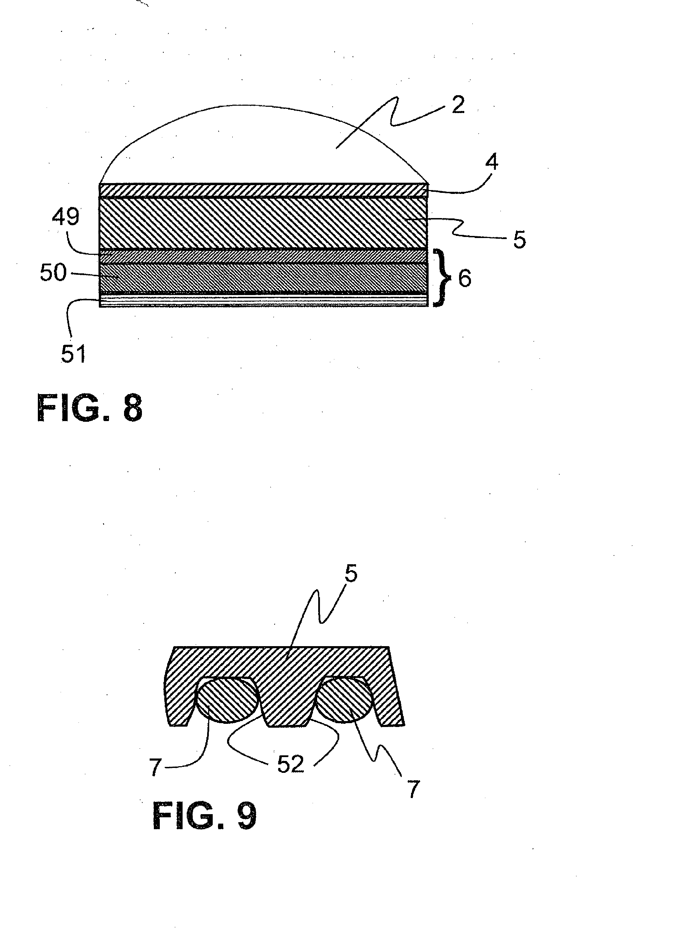

Fig. 4 zeigt schematisch eine Ausführungsform einer Verdampfungseinheit 1 mit einem Verdampfervolumen 2, welches von einem Wandaufbau 42 begrenzt ist, der beispielhaft in den Figuren 8 und 9 gezeigt ist. Der Verdampferhohlraum 2 weist eine Eingangsöffnung 43 für die Zufuhr von Harnstoff-Wasser-Lösung auf, die gegenüber eines Teils des Wandaufbaus 42 und damit der Wand 4 ausgebildet ist. Im Betrieb werden durch eine durch die Eingangsöffnung 43 hindurchtretende als Röhrchen 44, beispielsweise als Kapillare, ausgebildete Tropfenzugabe Tropfen 45 der Harnstoff-Wasser-Lösung in den Verdampferhohlraum 2 gegeben, die auf der Innenseite 46 der Wand 4 des Wandaufbaus 42 auftreffen und dort verdampfen. Der Wandaufbau 42 umfasst ebenfalls die Heizschicht, mittels der eine elektrische Beheizung des Verdampfervolumens 2 erfolgt. Die verdampfte Harn-stoff-Wasser-Lösung, die aufgrund der Ausbildung der Wand 4 aus Titan und den entsprechend vorliegendem Titanoxid bereits Anteile von Ammoniak enthalten kann, verlässt den Verdampferhohlraum 2 durch einen Auslauf 13 auf. Dieser weist Vorsprünge 46 auf, die verhindern, dass noch nicht verdampfte Harnstoff-Wasser-Lösung unverdampft den Auslauf 13 durchquert. Alternativ oder zusätzlich kann der Auslauf 13 gewunden und/oder mit mehreren Umlenkungen ausgebildet sein. Die Vorsprünge 46 stehen in thermischem Kontakt mit der Heizschicht 6, so dass bei Kontakt der Harnstoff-Wasser-Lösung mit den Vorsprüngen 46 eine Verdampfung erfolgt. An den Auslauf 13 kann sich ein Hydrolysekatalysatorkörper (nicht gezeigt) anschließen, um den Ammoniakanteil am Gas zu erhöhen. Der Verdampferhohlraum 2 weist einen zulaufenden Teilbereich 47 auf, der trichterförmig ausgebildet ist. Weiterhin weist der Verdampferhohlraum einen sich öffnenden Teilbereich 48 auf.

Fig. 5 zeigt schematisch eine vierte Ausführungsform einer Verdampfungseinheit 1, die zulaufend kegelförmig ausgebildet ist. Die Verdampfungseinheit 1 weist ein von einem Wandaufbau 42 begrenzten Verdampferhohlraum 2 auf, dessen innere Wand 4 aus Titan aufgebaut ist. Die Verdampfungseinheit 1 weist weiterhin eine Tropfenzugabe auf, die als Düse 53 ausgebildet ist, die im Betrieb mehrere Tropfensträhle mit Tropfen 45 von Harnstoff-Wasser-Lösung auf die Wand 4 des Verdampferhohlraums gibt. Der Auslauf 13 ist ähnlich gestaltet wie im Ausführungsbeispiel in Fig. 4.

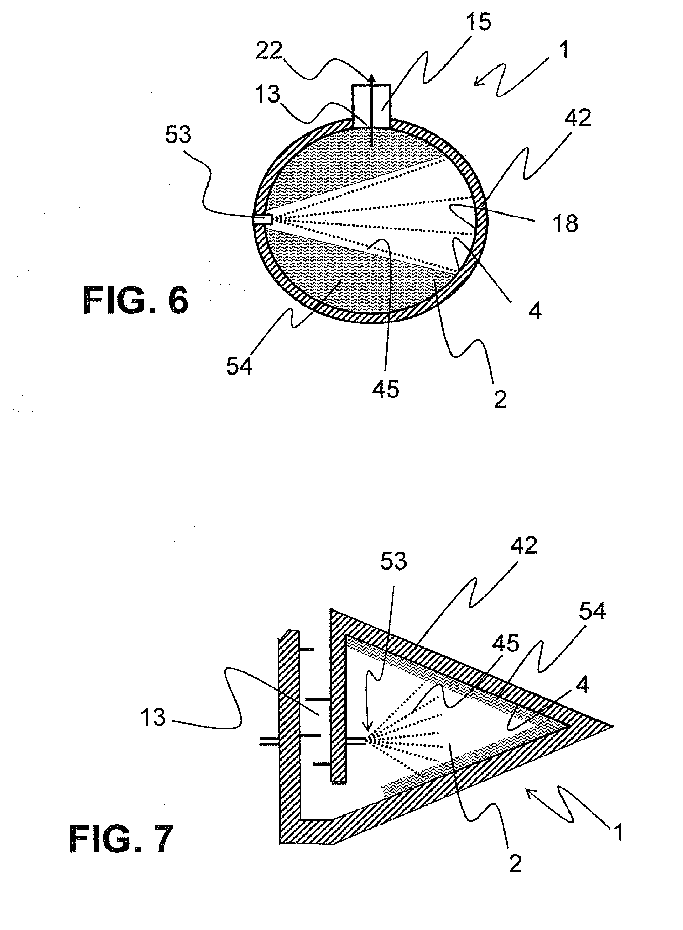

Fig. 6 zeigt schematisch eine fünfte Ausführungsform einer Verdampfungseinheit 1, die kugelförmig ausgebildet ist. Die Verdampfungseinheit 1 weist einen von einem Wandaufbau 42 begrenzten Verdampferhohlraum 2 auf, dessen innere Wand 4 zumindest teilweise mit einer Hydrolysebeschichtung 18 versehen ist. Die Verdampfungseinheit 1 weist eine Düse 53 auf, die im Betrieb mehrere Tropfenstrahlen mit Tropfen 45 von Harnstoff-Wasser-Lösung auf die Wand 4 des Verdampferhohlraums 2 abgibt. Der Auslauf 13 ist in einem Bereich außerhalb des durch die Tropfenstrahlen gebildeten Sprühkegels der Düse 53 ausgebildet und weist einen unmittelbar an die Verdampfungseinheit 1 angeschlossenen Hydrolysekatalysator 15 auf, der in Strömungsrichtung 22 von der zumindest teilweise umgesetzten Harnstoff-Wasser-Lösung, die nunmehr zumindest teilweise als Dampf vorliegt, durchströmt wird. Der Verdampferhohlraum 2 ist teilweise durch ein Gewebe oder Gewirr 54 ausgefüllt. In dem Bereich des Sprühkegels, der durch die Düse 53 erzeugt wird, ist bevorzugt kein Gewebe oder Gewirr 54 angeordnet. Die Tropfen 45 treffen auf die Wand 4 der Verdampfungseinheit 1 auf und werden dort fein zerstäubt. Durch das Gewebe/Gewirr 54 wird eine vergrößerte heiße Oberfläche in der Verdampfungseinheit 1 bereitgestellt, so dass eine vollständige Verdampfung und/oder möglichst weitgehende Umsetzung der Harnstoff-Wasser-Lösung zu Ammoniak ermöglicht ist. Die dampfförmige Lösung verlässt den Verdampferhohlraum 2 über den Auslauf 13.

Fig. 7 zeigt schematisch eine sechste Ausführungsform einer Verdampfungseinheit 1, die zulaufend kegelförmig ausgebildet ist. Die Verdampfungseinheit 1 weist einen von einem Wandaufbau 42 begrenzten Verdampferhohlraum 2 auf, dessen innere Wand 4 mit einem Gewebe/Gewirr 54 zumindest teilweise beaufschlagt ist. Die Verdampfungseinheit 1 weist weiterhin eine Tropfenzugabe auf, die als Düse 53 ausgebildet ist. Die Harnstoff-Wasser-Lösung wird durch das Gewebe/Gewirr 54, das durch die direkte Kontaktierung mit der Wand 4 beheizt wird, fein zerstäubt, umgesetzt und verdampft. Wie bereits in Fig. 6 dargestellt, kann auch hier der Bereich des Sprühkegels von Gewebe/Gewirr 54 freigehalten werden, so dass die Tropfen 45 direkt auf die Wand 4 auftreffen. Die in den Figuren 4, 5, 6 und 7 gezeigten Ausführungsformen der Verdampfungseinheit 1 können ebenfalls in vorteilhafter Weise in einer Vorrichtung 47 eingesetzt werden.

Fig. 8 zeigt beispielhaft einen Wandaufbau 42, der in einem Ausführungsbeispiel nach den Figuren 4 bis 7, aber auch in einem Ausführungsbeispiel mit einem Kanal 3 als Verdampferhohlraum 2 gewählt werden kann. Der Verdampferhohlraum 2 wird durch die Wand 4 begrenzt, die aus Titan aufgebaut ist. Mit der Wand 4 wärmeleitend verbunden ist die Wärmevermittlungsschicht 5 aus Aluminium und/oder Kupfer. Mit dieser Wärmevermittlungsschicht 5 ist eine Heizschicht 6 aussenseitig stoffschlüssig verbunden, insbesondere verlötet. Die Heizschicht 6 umfasst in diesem Ausführungsbeispiel von innen nach außen eine innere Kontaktschicht 49, einen selbstregelnden Heizwiderstand 50 und eine äußere Kontaktschicht 51. Durch die innere 49 und äußere Kontaktschicht 51 wird der selbstregelnde Heizwiderstand 50 elektrisch kontaktiert und betrieben. Diese Heizschicht 6 kann außenseitig von einer thermischen Isolierung umgeben sein und beheizt die Wärmevermittlungsschicht 5. Innere Kontaktschicht 49, selbstregelnder Heizleiter 50 und äußere Kontaktschicht 51 sind als koaxial und konzentrisch zueinander ausgebildet und können auch koaxiale und konzentrische Röhren bilden.

Fig. 9 zeigt schematisch einen Ausschnitt eines weiteren Beispiels eines Wandaufbaus 42. In die Wärmevermittlungsschicht 5 sind außenseitig Ausnehmungen 52 eingebracht, in die mindestens ein Heizleiter 7 eingelegt und mit der Wärmevermittlungsschicht 5 verlötet wird. Die Ausnehmungen 52 sind insbesondere gewindeartig und umlaufend um den Verdampferhohlraum 2 ausgeführt.

Die erfindungsgemäße Verdampfungseinheit 1 kann in vorteilhafter Weise zur Bereitstellung von gasförmigem Ammoniak aus Harnstoff-Wasser-Lösung eingesetzt werden. Durch den Aufbau mit einer Heizschicht, die bevorzugt elektrisch beheizbar ist, kann eine hochdynamische Regelung aufgebaut werden, mit der auch bei schnellen Lastwechsel und dadurch bedingten starken Anstiegen der Stickoxidkonzentrationcn im Abgas der Verbrennungskraftmaschine eine genügend große Menge Ammoniak bereitgestellt werden kann. Durch die kompakte Bauform der Verdampfungseinheit 1 kann diese in vorteilhafter Weise in mobilen Anwendungen wie in den Abgasanlagen 29 von Kraftfahrzeugen zum Einsatz kommen.

### Bezugszeichenliste

- 1: Verdampfungseinheit
- 2: Verdampferhohlraum
- 3: Kanal
- 4: Wand
- 5: Wärmevermittlungsschicht
- 6: Heizschicht
- 7: Heizleiter
- 8: erster Verdampfungsabschnitt
- 9: zweiter Verdampfungsabschnitt
- 10: Spalt
- 11: Einlauf
- 12: Zwischenstück
- 13: Auslauf
- 14: Reaktionszone
- 15: Hydrolysekatalysatorkörper
- 16: Einlaufkonus
- 17: Wabenkörper
- 18: Hydrolysebeschichtung
- 19: thermische Isolierung
- 20: Keramikschicht
- 21: Keramikrohr
- 22: Strömungsrichtung
- 23: zentrale Achse
- 24: Durchmesser
- 25: Abstand
- 26: Gehäuse
- 27: Kraftfahrzeug
- 28: Verbrennungskraftmaschine
- 29: Abgasanlage
- 30: katalytischer Konverter
- 31: SCR-Katalysatorkörper
- 32: Anschluss
- 33: Ammoniakhaltiger Gasstrom
- 34: Strömungsbeeinflusser
- 35: Eintrittsbereich
- 36: Austrittsbereich
- 37: Leitungsabschnitt
- 38: Reservoir
- 39: Dosierpumpe
- 40: Steuerung
- 41: Vorrichtung
- 42: Wandaufbau
- 43: Eingangsöffnung
- 44: Röhrchen
- 45: Tropfen
- 46: Vorsprung
- 47: zulaufender Teilbereich
- 48: öffnender Teilbereich
- 49: innere Kontaktschicht
- 50: selbstregelnder Heizwiderstand
- 51: äußere Kontaktschicht
- 52: Ausnehmung
- 53: Düse
- 54: Gewebe/Gewirr

## Patentansprüche

1. Verdampfungseinheit (1) zum Verdampfen einer wässrigen Lösung umfassend mindestens einen Reduktionsmittelvorläufer, umfassend:
wenigstens einen Verdampferhohlraum (2, 3), welcher durch eine Wand (4) aus einem Werkstoff umfassend Titan begrenzt ist und
eine außerhalb des Verdampferhohlraums (2) liegende Wärmevermittlungsschicht (5) aus einem Werkstoff mit einer Wärmeleitfähigkeit von mindestens 100 W/mK (Watt pro Meter und Kelvin), die mit dem Verdampferhohlraum (2) wärmeleitend verbunden ist,
**dadurch gekennzeichnet, dass** außerhalb der Wärmevermittlungsschicht (5) eine Heizschicht (6) ausgebildet ist, die stoffschlüssig mit der Wärmevermittlungsschicht (5) verbunden ist.

2. Verdampfungseinheit (1) nach Anspruch 1, bei der die Wärmevermittlungsschicht (5) mindestens eine außenseitig umlaufende Ausnehmung (52) aufweist, in die mindestens ein Heizleiter (7) eingelegt und mit der Wärmevermittlungsschicht (5) verlötet ist.

3. Verdampfungseinheit (1) nach einem der vorhergehenden Ansprüche, bei der die Heizschicht (6) mindestens einen selbstregelnden Heizwiderstand (50) umfasst.

4. Verdampfungseinheit nach Anspruch 3, bei der die Heizschicht (6) eine innere Kontaktschicht (49) und eine äußere Kontaktschicht (51) aufweist, zwischen der der selbstregelnde Heizwiderstand (50) ausgebildet ist.

5. Verdampfungseinheit (1) nach einem der vorhergehenden Ansprüche, bei der die Wärmevermittlungsschicht (5) aus einem Werkstoff umfassend mindestens eines der folgenden Materialien aufgebaut ist:
a) Kupfer;
b) Aluminium.

6. Verdampfungseinheit (1) nach einem der vorhergehenden Ansprüche, bei der der Verdampferhohlraum (2) einen Kanal (3) umfasst.

7. Verdampfungseinheit (1) nach einem der Ansprüche 1 bis 5, bei der der Verdampferhohlraum (2) eine Eingangsöffnung (43) für die Zufuhr von wässriger Lösung aufweist, die gegenüber eines Teils der Wand (4) des Verdampferhohlraums (2) ausgebildet ist.

8. Verdampfungseinheit (1) nach Anspruch 7, bei der eine Tropfenzugabe (44, 53) ausgebildet ist, die geeignet ist, wässrige Lösung zumindest teilweise in Tropfenform (45) auf einen Teil der Wand (4) des Verdampferhohlraums (2) aufzugeben.

9. Verdampfungseinheit (1) nach Anspruch 8, bei der die Tropfenzugabe eine Zerstäuberdüse (53) umfasst.

10. Verdampfungseinheit (1) nach einem der Ansprüche 7 bis 9, bei der der Verdampferhohlraum (2) zumindest in Teilbereichen (47) zulaufend ausgebildet ist.

11. Verdampfungseinheit (1) nach einem der Ansprüche 7 bis 10, bei der der Verdampferhohlraum (2) zumindest in mindestens einem Teilbereich trichterförmig ausgebildet ist.

12. Verdampfungseinheit (1) nach einem der vorhergehenden Ansprüche, bei der innerhalb des Verdampferhohlraums (2) ein Gewebe oder Gewirr (54) angeordnet ist.

13. Verdampfungseinheit (1) nach einem der vorhergehenden Ansprüche, bei der ein Hydrolysekatalysatorkörper (15) stromabwärts des Verdampferhohlraums (2) ausgebildet ist.

14. Vorrichtung (41) umfassend zumindest ein Reservoir (38), eine Pumpe (39), eine Verdampfungseinheit (1)nach einem der vorhergehenden Ansprüche, sowie zumindest einen, die vorgenannten Komponenten zumindest teilweise verbindenden Leitungsabschnitt (37).

15. Kraftfahrzeug (27) mit einer Verbrennungskraftmaschine (28) und einer Abgasanlage (29), wobei die Abgasanlage (29) zumindest einen SCR-Katalysatorkörper (31) aufweist und zwischen der Verbrennungskraftmaschine (28) und dem zumindest einen SCR-Katalysatorkörper (31) wenigstens ein Anschluss (32) mit einer Verdampfungseinheit (1) nach einem der Ansprüche 1 bis 13 oder eine Vorrichtung nach Anspruch 14 vorgesehen ist, so dass gasförmiges Reduktionsmittel und/oder ein gasförmiger Reduktionsmittelvorläufer so in die Abgasanlage (29) einleitbar sind, dass dieses beziehungsweise dieser zu dem zumindest einen SCR-Katalysatorkörper (31) strömt.

## Claims

1. Evaporation unit (1) for the evaporation of an aqueous solution comprising at least one reducing agent precursor, comprising:
at least one evaporator cavity (2, 3) which is delimited by a wall (4) made of a material comprising titanium, and
a heat-imparting layer (5) lying outside the evaporator cavity (2) and made of a material with a thermal conductivity of at least 100 W/mK (Watts per meter and Kelvin) which is connected in a thermally conductive fashion to the evaporator cavity (2),
**characterized in that** a heating layer (6) is formed outside the heat-imparting layer (5) and is materially connected to the heat-imparting layer (5).

2. Evaporation unit (1) as claimed in claim 1, in which the heat-imparting layer (5) has at least one externally continuous recess (52), into which at least one heating conductor (7) is inserted and is soldered/brazed to the heat-imparting layer (5).

3. Evaporation unit (1) as claimed in one of the preceding claims, in which the heating layer (6) comprises at least one self-regulating heating resistor (50).

4. Evaporation unit as claimed in claim 3, in which the heating layer (6) has an inner contact layer (49) and an outer contact layer (51), between which the self-regulating heating resistor (50) is formed.

5. Evaporation unit (1) as claimed in one of the preceding claims, in which the heat-imparting layer (5) is constructed from a material comprising at least one of the following materials:
a) copper;
b) aluminum.

6. Evaporation unit (1) as claimed in one of the preceding claims, in which the evaporator cavity (2) comprises a duct (3).

7. Evaporation unit (1) as claimed in one of claims 1 to 5, in which the evaporator cavity (2) has an inlet port (43) for the supply of aqueous solution, which inlet port is formed opposite part of the wall (4) of the evaporator cavity (2).

8. Evaporation unit (1) as claimed in claim 7, in which a droplet addition means (44, 53) is formed, which is suitable for applying aqueous solution at least partially in droplet form (45) to a part of the wall (4) of the evaporator cavity (2).

9. Evaporation unit (1) as claimed in claim 8, in which the droplet addition means comprises an atomizer nozzle (53).

10. Evaporation unit (1) as claimed in one of claims 7 to 9, in which the evaporator cavity (2) is designed to taper at least in part regions (47).

11. Evaporation unit (1) as claimed in one of claims 7 to 10, in which the evaporator cavity (2) is of funnel-shaped design at least in at least one part region.

12. Evaporation unit (1) as claimed in one of the preceding claims, in which a woven or tangled arrangement (54) is placed inside the evaporator cavity (2).

13. Evaporation unit (1) as claimed in one of the preceding claims, in which a hydrolysis catalyst body (15) is formed downstream of the evaporator cavity (2).

14. Device (41) comprising at least one reservoir (38), a pump (39), an evaporation unit (1) as claimed in one of the preceding claims and at least one line section (37) at least partially connecting the aforementioned components.

15. Motor vehicle (27) with an internal combustion engine (28) and with an exhaust system (29), the exhaust system (29) having at least one SCR catalyst body (31), and at least one connection (32) with an evaporation unit (1) as claimed in one of claims 1 to 13 or with a device as claimed in claim 14 being provided between the internal combustion engine (28) and the at least one SCR catalyst body (31), so that gaseous reducing agent and/or a gaseous reducing agent precursor can be introduced into the exhaust system (29) in such a way that it flows to the at least one SCR catalyst body (31).

## Revendications

1. Unité d'évaporation (1) pour l'évaporation d'une solution aqueuse comportant au moins un précurseur d'agent réducteur, comportant :
au moins une cavité d'évaporation (2,3), laquelle est délimitée par une paroi (4) en une matière comportant du titane et
une couche de transmission de chaleur (5), située à l'extérieur de la cavité d'évaporation (2), en une matière présentant une conductivité thermique d'au moins 100 W/mK (Watt par mètre et par Kelvin), qui est en liaison de conduction thermique avec la cavité d'évaporation (2),
**caractérisée en ce qu'**une couche chauffante (6) est réalisée à l'extérieur de la couche de transmission de chaleur (5), laquelle couche chauffante est reliée par liaison de matière à la couche de transmission de chaleur (5).

2. Unité d'évaporation (1) selon la revendication 1, dans laquelle la couche de transmission de chaleur (5) comprend au moins un évidement périphérique (52) situé du côté extérieur, dans lequel au moins un conducteur chauffant (7) est inséré et brasé sur la couche de transmission de chaleur (5).

3. Unité d'évaporation (1) selon l'une quelconque des revendications précédentes, dans laquelle la couche chauffante (6) comporte au moins une résistance chauffante autorégulatrice (50).

4. Unité d'évaporation selon la revendication 3, dans laquelle la couche chauffante (6) comprend une couche de contact intérieure (49) et une couche de contact extérieure (51), entre lesquelles est réalisée la résistance chauffante autorégulatrice (50).

5. Unité d'évaporation (1) selon l'une quelconque des revendications précédentes, dans laquelle la couche de transmission de chaleur (5) est constituée d'une matière comportant au moins l'un des matériaux suivants :
a) cuivre ;
b) aluminium.

6. Unité d'évaporation (1) selon l'une quelconque des revendications précédentes, dans laquelle la cavité d'évaporation (2) comporte un canal (3).

7. Unité d'évaporation (1) selon l'une quelconque des revendications 1 à 5, dans laquelle la cavité d'évaporation (2) comprend une ouverture d'entrée (43) pour l'alimentation en solution aqueuse, laquelle ouverture d'entrée est réalisée en regard d'une partie de la paroi (4) de la cavité d'évaporation (2).

8. Unité d'évaporation (1) selon la revendication 7, dans laquelle un moyen d'addition de gouttes (44, 53) est réalisé, lequel est approprié pour appliquer une solution aqueuse au moins partiellement sous forme de gouttes (45) sur une partie de la paroi (4) de la cavité d'évaporation (2).

9. Unité d'évaporation (1) selon la revendication 8, dans laquelle le moyen d'addition de gouttes comporte une buse d'atomisation (53).

10. Unité d'évaporation (1) selon l'une quelconque des revendications 7 à 9, dans laquelle la cavité d'évaporation (2) est réalisée de manière effilée au moins dans des régions partielles (47).

11. Unité d'évaporation (1) selon l'une quelconque des revendications 7 à 10, dans laquelle la cavité d'évaporation (2) est réalisée en forme d'entonnoir au moins dans au moins une région partielle.

12. Unité d'évaporation (1) selon l'une quelconque des revendications précédentes, dans laquelle une étoffe ou un enchevêtrement (54) est disposé(e) à l'intérieur de la cavité d'évaporation (2).

13. Unité d'évaporation (1) selon l'une quelconque des revendications précédentes, dans laquelle un corps de catalyseur d'hydrolyse (15) est réalisé en aval de la cavité d'évaporation (2).

14. Dispositif (41) comportant au moins un réservoir (38), une pompe (39), une unité d'évaporation (1) selon l'une quelconque des revendications précédentes, ainsi qu'au moins une portion de conduite (37) reliant au moins partiellement les composants susmentionnés.

15. Véhicule automobile (27) comprenant un moteur à combustion interne (28) et un système d'échappement (29), le système d'échappement (29) comprenant au moins un corps de catalyseur RCS (31), et au moins un raccord (32) avec une unité d'évaporation (1) selon l'une quelconque des revendications 1 à 13 ou un dispositif selon la revendication 14 étant prévu entre le moteur à combustion interne (28) et l'au moins un corps de catalyseur RCS (31), de telle sorte qu'un agent réducteur gazeux et/ou un précurseur d'agent réducteur gazeux puisse(nt) être introduit(s) dans le système d'échappement (29) de telle sorte qu'il s'écoule jusqu'à l'au moins un corps de catalyseur RCS (31).
